# EUROPEAN PATENT SPECIFICATION

(11) **EP 2 901 023 B1**
(45) Date of publication and mention of the grant of the patent: **30.10.2019**
(21) Application number: 13864424.0
(22) Date of filing: 25.09.2013
(51) Int. Cl.: B23P 15/04, F01D 5/14, B23K 1/00, F04D 29/02, F04D 29/32

(54) **ALUMINUM BRAZING OF HOLLOW TITANIUM FAN BLADES**
ALUMINIUMLÖTUNG VON HOHLEN TITANGEBLÄSESCHAUFELN
BRASAGE FORT PAR ALUMINIUM DE PALES DE SOUFFLANTE CREUSES EN TITANE

(30) Priority: 25.09.2012 US 201213625956
(43) Date of publication of application: 05.08.2015
(73) Proprietor: United Technologies Corporation, Farmington, CT 06032 (US)
(72) Inventor: BALES, Daniel A., Avon, CT 06001 (US); WATSON, Thomas J., South Windsor, CT 06001 (US)
(74) Representative: Dehns
(86) International application number: PCT/US2013/061571
(87) International publication number: WO 2014/099067

(56) References cited:
- GB-A- 741 736
- JP-A- 2005 214 198
- US-A- 3 660 891
- US-A- 4 040 822
- US-A- 5 226 982
- US-A1- 2004 099 660
- US-A1- 2005 100 442
- US-A1- 2005 249 601
- US-A1- 2005 254 955
- US-A1- 2008 020 233
- US-B2- 6 565 989

## Description

### BACKGROUND

This disclosure relates to hollow fan blades and a method of brazing the same.

Titanium-based alloys are widely used for structural applications in the aerospace industry. These alloys provide good fatigue properties, erosion benefits relative to aluminum alloys, and are light weight compared to steel, stainless steels, and nickel alloys. While significant weight savings can be achieved with solid titanium components, even greater weight savings can be achieved using hollow structures.

It is difficult to create a complicated airfoil shape, especially a hollow fan blade (HFB). Hollow titanium fan blades are typically produced by diffusion bonding two machined cavity-containing plates on the neutral axis, hot forming and inflating the bonded assembly to achieve its final shape within complex dies, and finally post-thermal processing the blade's surface to remove any surface contamination. Much of the part cost is incurred by the complex bonding and forming process.

Common practice for joining hollow titanium structures is by brazing with titanium-nickel-copper alloys or by diffusion bonding. Brazing titanium with aluminum has been used for decades, but requires a narrow window of time and temperature. This stems from the fact that aluminum and titanium can form brittle intermetallic phases at the joint interface, if line and temperature are not properly controlled. Document US2004/0099660 A1 discloses an apparatus and method for forming a localized joint in a structural member, as an airfoil, where the structural member can be formed of a variety of materials, including titanium, and the joining material can comprise an aluminium alloy.

### SUMMARY

The invention is defined by the appended independent claims 1 and 6. The dependent claims define further embodiments of the invention. In one exemplary embodiment, a fan blade includes first and second titanium portions that are secured to one another with an aluminum alloy braze.

In a further embodiment of any of the above, the first titanium portion is provided by a forging.

In a further embodiment of any of the above, the first titanium portion includes machined ribs.

In a further embodiment of any of the above, the machined ribs include undercuts that have an arcuate shape.

In the exemplary embodiment, the second titanium portion provides a cover, and in a further embodiment of any of the above, the second titanium portion is a hot formed sheet.

In a further embodiment of any of the above, the fan blade has a blade root defined by the first titanium portion.

In a further embodiment of any of the above, the fan blade has a blade tip defined by the first titanium portion.

In a further embodiment of any of the above, the cover provides one side of the airfoil.

In a further embodiment of any of the above, the first titanium portion includes opposing first and second edges that define the fan blade leading and trailing edges.

In another exemplary embodiment, a method of manufacturing a fan blade includes providing first and second titanium portions, applying an aluminum alloy braze to at least one of the first and second titanium portions, and heating the fan blade to melt the aluminum alloy braze and join the first and second portions to one another to provide a fan blade with an airfoil exterior contour.

In a further embodiment of any of the above, the method includes the step of forging the first titanium portion.

In a further embodiment of any of the above, the method includes the step of machining the first titanium portion.

In a further embodiment of any of the above, the method includes the step of applying the aluminum alloy braze before the machining step.

In a further embodiment of any of the above, the method includes the step of pressing the second titanium portion to produce a cover that provides a side of the airfoil.

In a further embodiment of any of the above, the method includes the step of pickling the cover.

In a further embodiment of any of the above, the method includes the step of applying the aluminum alloy braze after pickling the cover.

In a further embodiment of any of the above, the method includes the step of bagging the first and second titanium portions prior to performing the heating step.

In a further embodiment of any of the above, the method includes the step of purging the bag prior to the heating step.

In a further embodiment of any of the above, the method includes the step of pulling a vacuum on the bag during the heating step.

In a further embodiment of any of the above, the first titanium portion provides a root, a tip and leading and trailing edges of the airfoil exterior contour.

### BRIEF DESCRIPTION OF THE DRAWINGS

The disclosure can be further understood by reference to the following detailed description when considered in connection with the accompanying drawings wherein:
Figure 1 is a perspective view of an example brazed titanium fan blade.
Figure 2A is a cross-sectional view of the fan blade shown in Figure 1 taken along line 2A-2A.
Figure 2B is an exploded enlarged view of a portion of the fan blade shown in Figure 2A.
Figure 3 is a flow chart depicting an example manufacturing method for the fan blade.
Figure 4 schematically depicts the brazing process.

### DETAILED DESCRIPTION

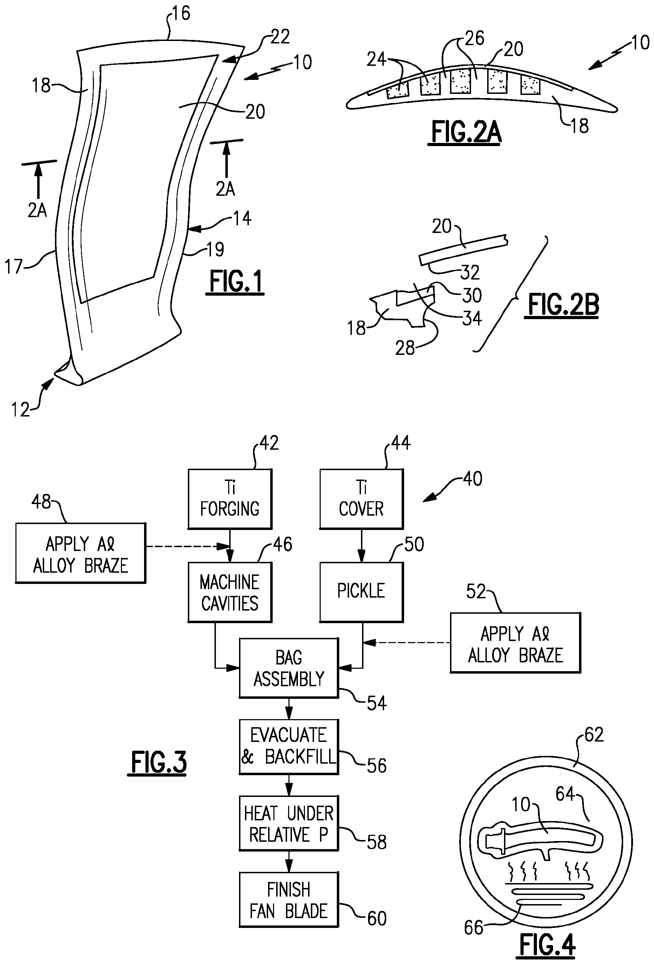

A fan blade 10 is schematically depicted in Figures 1 and 2. The fan blade 10 includes a root 12 supporting an airfoil 14 that extends to a tip 16. First and second titanium portions 18, 20 are brazed to one another to provide an exterior contour 22 of the fan blade 10.

In the example, the first titanium portion 18 is provided by a forged blank that is machined to remove material 24. Ribs 26 are provided that have undercuts 28 with an arcuate shape and within the interior of the first titanium portion 18 to reduce weight while providing fan blade structural integrity, ensuring blade fatigue life, and supporting the airfoil cover 20. The first titanium portion 18 provides the root 12 and one side of the airfoil 14 along with the tip 16. The first portion 18 also provides first and second edges that define fan blade leading and trailing edges 17, 19.

The second titanium portion 20 provides a cover that is secured over the interior of the first titanium portion 18 by a braze 34. A titanium cover would be used for its thermal expansion match with the titanium forging, its superior corrosion resistance relative to aluminum, its improved stiffness relative to aluminum, its improved erosion resistance relative to aluminum, and its improved foreign object debris/impact resistance relative to aluminum.

The braze 34 is provided on one or both of the first and second mating surfaces 30, 32, which are respectively provided by the first and second titanium portions 18, 20. In one example, the braze 34 is an aluminum alloy, such as Al-Cu-Mn, having less than 3 wt% copper and less than 5 wt% manganese and having a solidus-liquidus range within 635°C-663°C (1175°F-1225°F). The aluminum or aluminum alloy chosen for brazing would be pre-placed onto either the titanium cover or the titanium forging as a photo etched pre-form or cathodic arc deposited directly onto the titanium cover or the titanium forging. In one example, the entire surface of the side of the cover being brazed or the side of the forging being brazed would be cathodic arc deposited prior to machining the forging or prior to selective etching the titanium cover to only provide braze material at areas being joined.

A method 40 of forming the fan blade 10 is schematically illustrated at 40. A titanium forging (first titanium portion 18) is provided, as indicated by block 42. The proposed method of construction uses a near net shape titanium forging with certified mechanical properties.

The titanium forging is machined, as indicated at block 46, to provide structure similar to that shown in Figures 1 and 2, for example. The fan blade design may be tailored such that no internal foam inserts would be needed, although inserts may be used if desired. Prior to machining (in instances where no metallic foam inserts are used), an aluminum alloy braze may be applied, as indicated at block 48. Thus, the braze will be provided only on the raised surfaces, which provides the first mating surface 30, subsequent to machining.

A titanium cover (second titanium portion 20) may be provided, as indicated at block 44. The titanium cover may be hot formed at processing conditions that ensure maintaining its certified mechanical properties, while achieving the desired shape for bonding. Alternatively, or in addition to, an aluminum alloy braze may be applied, as indicated at block 52, to the titanium cover subsequent to pickling, as indicated at block 50. Pickling provides a contaminant-free surface on the cover.

The cover is arranged over the titanium forging such that the first and second mating surfaces 30, 32 engage one another. The assembled fan blade 10 is inserted into a bag 64 (Figure 4), as indicated at block 54. The bag is a metallic bag, which may be constructed from a stainless steel or a nickel alloy foil, for example, that can be sealed.

In one example, the sealed bagged fan blade is loaded into a vacuum compression brazing furnace 62 having a heating element 66, which is shown in Figure 4. Oxygen and nitrogen within the bag are evacuated and the bag is backfilled with argon, as indicated at block 56. Evacuation and backfilling may be repeated multiple times to reduce the oxygen and nitrogen to an acceptable concentration within the bag and within the fan blade's internal cavities. Following the final evacuation, a negative atmosphere is maintained within the sealed bag. The magnitude of the bag's internal negative pressure is such that any positive pressure or vacuum external to the bag always provides force upon the titanium cover 20 and the machined fan blade 10 within the bag 64, throughout all subsequent heating, brazing and cooling.

Brazing could occur within a vacuum furnace capable of applying a positive pressure of argon, within an argon retort, within a furnace capable of maintaining a hard vacuum or within a vacuum furnace capable of maintaining a partial pressure of argon. In the first example, vacuum compression brazing furnace 62 is capable of applying a positive pressure of argon to the bagged fan blade 10 during heating to melt the aluminum alloy braze material and during subsequent cooling. If brazing within an argon retort, such an environment would be free of both oxygen and nitrogen to the extent acceptable for producing a finished product within the design criteria but meeting or bettering specified surface contamination requirements. If in a standard vacuum furnace, brazing would be accomplished by heating parts in a retort or other line-of-sight shielding at 5x10-4 torr or lower pressure within a temperature range of 1225°F to 1290°F. Regardless of the furnace choice, time between 1175°F on heating and 1175°F on cooling would be controlled to produce a braze microstructure that conforms to metallurgical standards established by material characterization testing and fan blade component testing. Such standards would control amount of particulate, titanium aluminide, and eutectic intermetallic structure within the braze. Because the aluminum brazing temperature is lower than annealing temperatures used for titanium alloys such as Ti-6-4 and Ti-6-2-4-2, certified mechanical properties of the fan blade cover 20 and the fan blade forging 18 previously created during prior plate/sheet rolling, fan blade forging, and associated follow-on heat treatment will be maintained throughout all aluminum brazing thermal processing. The fan blade is then finished, if necessary, as indicated at block 60.

Although an example embodiment has been disclosed, a worker of ordinary skill in this art would recognize that certain modifications would come within the scope of the claims. For that reason, the following claims should be studied to determine their true scope and content.

## Claims

1. A fan blade (10) comprising first and second titanium portions (18, 20) secured to one another with an aluminum alloy braze,
**characterised in that**:
the first titanium portion (18) includes machined ribs (26), the first and second titanium portions (18, 20) are brazed to one another to provide an exterior contour (22) of the fan blade (10), the first titanium portion (18) includes opposing first and second edges that define the fan blade leading and trailing edges (17, 19), thus providing a root (12), a tip (16) and leading and trailing edges (17, 19) of the airfoil exterior contour (22), wherein the second titanium portion (20) provides a cover.

2. The fan blade (10) according to claim 1, wherein the first titanium portion (18) is provided by a forging.

3. The fan blade (10) according to claim 1 or 2, wherein the machined ribs (26) include undercuts having an arcuate shape.

4. The fan blade (10) according to and preceding claim, wherein the second titanium portion (20) is a hot-formed sheet.

5. The fan blade (10) according to any preceding claim, wherein the cover provides one side of the airfoil (14).

6. A method (40) of manufacturing a fan blade (10) comprising:
providing first and second titanium portions (18, 20);
applying an aluminum alloy braze to at least one of the first and second titanium portions (18, 20); and
heating the fan blade (10) to melt the aluminum alloy braze and join the first and second portions (18, 20) to one another to provide a fan blade (10) with an airfoil exterior contour (22),
**characterised in that**:
the first titanium portion (18) includes machined ribs (26), the first and second titanium portions (18, 20) are brazed to one another to provide an exterior contour (22) of the fan blade (10), the first titanium portion (18) provides a root (12), a tip (16) and leading and trailing edges (17, 19) of the airfoil exterior contour (22), and the second titanium portion (20) provides a cover.

7. The method (40) according to claim 6, comprising the step of forging the first titanium portion (18).

8. The method (40) according to claim 6 or 7, comprising the step of machining the first titanium portion (18).

9. The method (40) of claim 8, comprising the step of applying the aluminum alloy braze before the machining step.

10. The method (40) according to any of claims 6 to 9, comprising the step of pressing the second titanium portion (20) to produce a cover providing a side of the airfoil (14).

11. The method (40) according to claim 10, comprising the step of pickling the cover.

12. The method of claim 11, comprising the step of applying the aluminum alloy braze after pickling the cover.

13. The method (40) according to any of claims 6 to 12, comprising the step of bagging the first and second titanium portions (18, 20) prior to performing the heating step.

14. The method (40) according to claim 13, comprising the step of purging the bag prior to the heating step, and optionally comprising the step of pulling a vacuum on the bag (64) during the heating step.

## Patentansprüche

1. Gebläseschaufel (10), umfassend einen ersten und zweiten Titanabschnitt (18, 20), die mit einem Aluminiumlegierungslötverbindung aneinander befestigt sind, **dadurch gekennzeichnet, dass**:
der erste Titanabschnitt (18) maschinell eingearbeitete Rippen (26) beinhaltet, der erste und der zweite Titanabschnitt (18, 20) miteinander verlötet sind, um eine Außenkontur (22) der Gebläseschaufel (10) bereitzustellen, der erste Titanabschnitt (18) eine gegenüberliegende erste und zweite Kante umfasst, welche die Vorder- und Hinterkante (17, 19) der Gebläseschaufel definieren, wodurch eine Wurzel (12), eine Spitze (16) und eine Vorder- und Hinterkante (17, 19) der Schaufelblattaußenkontur (22) bereitgestellt werden, wobei der zweite Titanabschnitt (20) eine Abdeckung bereitstellt.

2. Gebläseschaufel (10) nach Anspruch 1, wobei der erste Titanabschnitt (18) durch Schmieden bereitgestellt wird.

3. Gebläseschaufel (10) nach Anspruch 1 oder 2, wobei die maschinell eingearbeiteten Rippen (26) Hinterschneidungen mit einer bogenförmigen Form umfassen.

4. Gebläseschaufel (10) nach einem der vorangehenden Ansprüche, wobei der zweite Titanabschnitt (20) ein warmgeformtes Blech ist.

5. Gebläseschaufel (10) nach einem der vorangehenden Ansprüche, wobei die Abdeckung eine Seite des Schaufelblatts (14) bereitstellt.

6. Verfahren (40) zum Herstellen einer Gebläseschaufel (10), Folgendes umfassend:
Bereitstellen eines ersten und zweiten Titanabschnitts (18, 20) ;
Auftragen einer Aluminiumlegierungslötverbindung auf mindestens einen von dem ersten und zweiten Titanabschnitt (18, 20); und
Erhitzen der Gebläseschaufel (10), um die Aluminiumlegierungslötverbindung zu schmelzen und den ersten und zweiten Abschnitt (18, 20) aneinander zu befestigen, um eine Gebläseschaufel (10) mit einer Schaufelblattaußenkontur (22) bereitzustellen,
**dadurch gekennzeichnet, dass**:
der erste Titanabschnitt (18) maschinell eingearbeitete Rippen (26) beinhaltet, der erste und der zweite Titanabschnitt (18, 20) miteinander verlötet sind, um eine Außenkontur (22) der Gebläseschaufel (10) bereitzustellen, der erste Titanabschnitt (18) eine Wurzel (12), eine Spitze (16) und eine Vorder- und Hinterkante (17, 19) der Schaufelblattaußenkontur (22) bereitstellt und der zweite Titanabschnitt (20) eine Abdeckung bereitstellt.

7. Verfahren (40) nach Anspruch 6, umfassend den Schritt des Schmiedens des ersten Titanabschnitts (18).

8. Verfahren (40) nach Anspruch 6 oder 7, umfassend den Schritt des maschinellen Bearbeitens des ersten Titanabschnitts (18).

9. Verfahren (40) nach Anspruch 8, umfassend den Schritt des Auftragens der Aluminiumlegierungslötverbindung vor dem maschinellen Bearbeitungsschritt.

10. Verfahren (40) nach einem der Ansprüche 6 bis 9, umfassend den Schritt des Pressens des zweiten Titanabschnitts (20), um eine Abdeckung herzustellen, die eine Seite des Schaufelblatts (14) bereitstellt.

11. Verfahren (40) nach Anspruch 10, umfassend den Schritt des Beizens der Abdeckung.

12. Verfahren nach Anspruch 11, umfassend den Schritt des Auftragens der Aluminiumlegierungslötverbindung nach Beizen der Abdeckung.

13. Verfahren (40) nach einem der Ansprüche 6 bis 12, umfassend den Schritt des Einsackens des ersten und zweiten Titanabschnitts (18, 20) vor Durchführen des Erwärmungsschritts.

14. Verfahren (40) nach Anspruch 13, umfassend den Schritt des Spülens des Beutels vor dem Erwärmungsschritt und optional umfassend den Schritt des Anlegens eines Vakuums an den Beutel (64) während des Erwärmungsschritts.

## Revendications

1. Aube de soufflante (10) comprenant des première et seconde parties en titane (18, 20) fixées l'une à l'autre avec une brasure en alliage d'aluminium,
**caractérisée en ce que** :
la première partie en titane (18) inclut des nervures usinées (26), les première et seconde parties en titane (18, 20) sont brasées l'une à l'autre pour fournir un contour extérieur (22) de l'aube de soufflante (10), la première partie en titane (18) inclut des premier et second bords opposés qui définissent les bords d'attaque et de fuite (17, 19) d'aube de soufflante, ce qui fournit un pied (12), une pointe (16) et des bords d'attaque et de fuite (17, 19) du contour extérieur de profil aérodynamique (22), dans laquelle la seconde partie en titane (20) fournit un revêtement.

2. Aube de soufflante (10) selon la revendication 1, dans laquelle la première partie en titane (18) est fournie par un forgeage.

3. Aube de soufflante (10) selon la revendication 1 ou 2, dans laquelle les nervures usinées (26) incluent des contre-dépouilles ayant une forme arquée.

4. Aube de soufflante (10) selon une quelconque revendication précédente, dans laquelle la seconde partie en titane (20) est une tôle formée à chaud.

5. Aube de soufflante (10) selon l'une quelconque des revendications précédentes, dans laquelle le revêtement fournit un côté du profil aérodynamique (14).

6. Procédé (40) de fabrication d'une aube de soufflante (10) comprenant :
la fourniture de première et seconde parties en titane (18, 20) ;
l'application d'une brasure en alliage d'aluminium sur au moins l'une des première et seconde parties en titane (18, 20) ; et
le chauffage de l'aube de soufflante (10) pour faire fondre la brasure en alliage d'aluminium et relier les première et seconde parties (18, 20) l'une à l'autre pour fournir une aube de soufflante (10) ayant un contour extérieur de profil aérodynamique (22),
**caractérisé en ce que** :
la première partie en titane (18) inclut des nervures usinées (26), les première et seconde parties en titane (18, 20) sont brasées l'une à l'autre pour fournir un contour extérieur (22) de l'aube de soufflante (10), la première partie en titane (18) fournit un pied (12), une pointe (16) et des bords d'attaque et de fuite (17, 19) du contour extérieur de profil aérodynamique (22), et la seconde partie en titane (20) fournit un revêtement.

7. Procédé (40) selon la revendication 6, comprenant l'étape de forgeage de la première partie en titane (18).

8. Procédé (40) selon la revendication 6 ou 7, comprenant l'étape d'usinage de la première partie en titane (18).

9. Procédé (40) selon la revendication 8, comprenant l'étape d'application de la brasure en alliage d'aluminium avant l'étape d'usinage.

10. Procédé (40) selon l'une quelconque des revendications 6 à 9, comprenant l'étape de pressage de la seconde partie en titane (20) pour produire un revêtement fournissant un côté du profil aérodynamique (14).

11. Procédé (40) selon la revendication 10, comprenant l'étape de décapage du revêtement.

12. Procédé selon la revendication 11, comprenant l'étape d'application de la brasure en alliage d'aluminium après le décapage du revêtement.

13. Procédé (40) selon l'une quelconque des revendications 6 à 12, comprenant l'étape d'ensachage des première et seconde parties en titane (18, 20) avant de réaliser l'étape de chauffage.

14. Procédé (40) selon la revendication 13, comprenant l'étape de purge du sac avant l'étape de chauffage, et facultativement comprenant l'étape de tirage d'un vide sur le sac (64) au cours de l'étape de chauffage.
